Europäisches Patentamt

European Patent Office

Office européen des brevets

(11) Publication number: **0 285 457**
**A1**

## (12) EUROPEAN PATENT APPLICATION

(21) Application number: **88302997.7**

(22) Date of filing: **05.04.88**

(51) Int. Cl.⁴: **A 01 K 61/00**

(30) Priority: **03.04.87 GB 8708053**

(43) Date of publication of application:
**05.10.88 Bulletin 88/40**

(84) Designated Contracting States:
**BE DE ES FR GB GR IT NL SE**

(71) Applicant: **Brooke, Edmund Michael**
**34 Bohill**
**Penryn Cornwall TR10 8JG (GB)**

(72) Inventor: **Brooke, Edmund Michael**
**34 Bohill**
**Penryn Cornwall TR10 8JG (GB)**

(74) Representative: **Bryer, Kenneth Robert**
**K.R. Bryer & Co. 1 Strangways Villas**
**Truro Cornwall TR1 2PA (GB)**

(54) **A method and apparatus for shellfish culture.**

(57) Shellfish purification apparatus has a plurality of stackable shallow containers (12) each having an imperforate bottom wall (37), imperforate side walls (13,14), overflow means (15,44) to limit water in the container to a maximum level determined by the level of the overflow means (15,33) and a drainage hole (36), each of the containers (12) having a plurality of channels in the bottm wall defined by parallel upstanding ribs, to support the shellfish spaced from the bottom wall of the container. The container may optionally or alternatively have an associated inner tray (16) of mesh or perforate material the shape of which is such that the major part of the bottom wall (19) thereof is spaced from the bottom wall (37) of the said container (12) when placed therein; this may be achieved by fitting the inner tray with legs (20) or by forming ledges or upstanding projections (46) in the bottom of the container (12). Water enters the container at a level lower than that of the lowermost shellfish so that they experience a rising current.

FIG 2

**Description**

## A METHOD AND APPARATUS FOR SHELLFISH CULTURE

The present invention relates generally to a shellfish culture system, and to a method of culturing shellfish.

It has long been known that molluscs very readily become contaminated in areas where water pollution exists because molluscs, such as mussels and oysters, feed and respire by passing the current of water between the two shell valves and over the gills. The gills have complex surfaces at which oxygen for respiration is removed from the water and small particulate matter, including food, organic debris and bacteria is trapped in mucus and passed to the mouth for ingestion. In polluted water the shellfish may accumulate pathogenic material, but when polluted shellfish are moved to a clean environment free from pollution their natural re-circulating processes expel contaminants by physical expulsion. Pathogenic bacterial contamination ceases by natural mortality. By maintaining the shellfish in a pollution-free environment for sufficiently long it is possible for the shellfish to clean themselves thereby rendering them fit for human consumption. However, there are relatively few natural sites at which the water pollution is sufficiently low for this purification process to take place on an extensive scale and so-called "intensive" systems are therefore required. Because the contaminating pollutants are in part physically expelled from the shellfish it is necessary for them to be maintained in a relatively shallow layer since, in a deep layer, contaminating pollutants expelled in the upper layers have a high risk of being ingested into molluscs at a lower level by the natural through-flow of water as these contaminants fall through the layers. Even on a so-called intensive level, therefore, relatively large areas are required and this has lead to considerable difficulties since the capital cost of producing large areas of shallow tanks has been prohibitive and has encouraged some shellfish purifiers to seek to operate their purification systems with layers of shellfish greater than those recommended by the local Health Authorities or required by Health Regulations. Another problem which occurs if the shellfish are stacked in thick layers is that the weight of shellfish in the upper parts of the layer may prevent those in the lower parts of the layer from opening properly and, in addition, circulation of water around the shellfish may be restricted leading to a local oxygen depletion and a lower self-cleaning activity.

These conflicting requirements of a large tank area and shallow layers of shellfish have resulted in low production throughput and a restricted development of intensive purification systems. Other problems encountered with such systems include the necessary control of water temperature and salinity. The latter is not a serious problem if the purification system is sited with access to seawater, and can be overcome even at inland sites by the addition of appropriate salts to fresh water. The water temperature control, however, is universally important for a number of reasons. The main aim of cooling is to slow down metabolism and thus prevent loss of condition in Summer, bearing in mind that the shellfish are effectively being starved during purification. Cooling may also to some extent prevent spawning in the tanks, although not in all circumstances. Moreover, the shellfish metabolism is only properly active above a certain minimum threshold temperature and below a critical temperature at which the maximum dissolved oxygen content has fallen to a minimum level tolerable by the shellfish. Although shellfish activity increases with an increase in temperature the fall in dissolved oxygen content with an increase in temperature places a practical upper limit on the temperature which the water must be allowed to reach. This may, of course, also be compensated by an efficient aeration system, but nevertheless close control of both temperature and aeration is required.

The present invention seeks to provide an intensive shellfish purification system in which the above disadvantages of known such systems are overcome, and which requires a relatively small base area whilst nevertheless providing optimum conditions for each shellfish to purify itself with an uncontaminated through-flow of clean water.

According to the present invention, there is provided a shellfish culture or purification system characterised in that it includes a plurality of stackable shallow containers each having an imperforate bottom wall, imperforate side walls, overflow means to limit water therein to a maximum level determined by the level of the overflow means, and a drainage hole, each of the containers having means for supporting shellfish spaced from the bottom wall of the said container when placed theein whereby to allow detritus to fall below the level at which the shellfish are supported.

The present invention thus provides means by which shellfish may be grown in a restricted environment for long periods as well as means specifically directed to short-term purification, and thus encompass means for culturing shellfish as well as means for purifying them.

By making the containers stackable it is possible to place these one above the other, each containing a shallow layer of shellfish, and the overflow means of each container allows the water in each container to reach a maximum level, successively lower containers receiving their input from the overflow of the adjacent container above it. Because of the weir effect the water at the surface is allowed to flow over from an upper container into the next lower container, whereas detritus falling from the shellfish during purification falls onto the bottom of the container below the level at which the shellfish are supported. In one embodiment of the invention the means for supporting the shellfish spaced from the bottom comprises a foraminous inner tray or liner in an arrangement such that the bottom wall of the tray or liner is spaced from the bottom of the container.

The spacing may be achieved by resting the tray or liner on upstanding supports, such as studs or ledges rising from the bottom of the container, or by providing the tray or liner with its own legs or ribs which hold its bottom wall spaced from the bottom of the container. The presence of the mesh serves not only in helping to still the water currents so that detritus falling from the shellfish onto the bottom of the container is undisturbed by the through-flow of water, and also maintains the shellfish themselves out of contact with the detritus so that at the end of the purification cycle or growth period, when the tanks are drained down to allow removal of the shellfish, the inner foraminous trays can be lifted out from the individual containers without causing any disturbance to the detritus, thereby facilitating the subsequent washing of the now purified shellfish.

In one embodiment of the invention each foraminous tray is made of a mesh or perforate material and has downwardly projecting feet or ribs for contacting the bottom of the container so as to hold the major part of the bottom of the mesh of perforate tray spaced therefrom. Alternatively, however, the containers may have shoulders or ledges for receiving the edges of the mesh or perforate trays to space the bottom of the tray from the bottom of the container.

Individual shallow trays may be stacked up to any height, therefore, and the conditions experienced by shellfish in any one tray will always be substantially the same as those experienced in a shallow open tray, layers of shellfish above and below that in any given tray having no influence and causing no pollution to the shellfish in adjacent layers. In this respect, the term "shallow" as applied to a container, will be understood to define a container in which the height dimension is less than the length or width dimension.

A stack of containers having inner mesh or perforate trays therein may be housed in an outer tank or tray from which water may be pumped to a water cleaning or purification circuit. This cleaning and purification circuit preferably includes component elements, known per se, for cleaning and purifying the water, and for example may include an ultra-violet light steriliser, a water temperature control unit (particularly a refrigerator, although a heater may also be provided for sites where winter temperatures fall to a very low level) and, if required, at least one filter. The stack of containers may, alternatively be positioned over an open tank from which water is drawn at a point sufficiently spaced from the bottom to allow it to serve as a sediment settling tank.

The water cleaning and purification circuit preferably also includes a reservoir able to contain a quantity of water in excess (and preferably substantially in excess) of that required to fill all of the stackable containers in the stack to the level of the said standpipe overflows therein.

The overflow means in the stackable containers may be in the form of standpipe overflows which are preferably offset towards one end of the containers, which latter are symmetrical about a longitudinal centre line to allow vertically adjacent containers to be longitudinally reversed so that a through-flow of water entering from the standpipe overflow of the container above and exiting from the container's own standpipe overflow is obtained.

The inner mesh or perforate tray may be shaped such that the standpipe overflow of a stackable container housing the tray passes outside the perimeter of the tray, or alternatively may have at least one opening sufficiently large to permit the passage of a standpipe overflow therethrough.

In an alternative embodiment of the invention the or each container has water-directing input means for directing the inflow of water to a low level in the container. Preferably the said water-directing input means comprise a barrier at the end of the container opposite the said overflow means, extending above the level of the overflow means and defining water passages adjacent the bottom of the container.

Instead of or as well as a foraminous tray or liner the container may be provided with means for supporting shellfish spaced from the bottom wall of the container comprising or including a plurality of parallel upstanding ribs defining parallel channels therebetween and the upper surfaces of which constitute support surfaces for the shellfish or for containment means housing the shellfish.

The water cleaning and purification circuit may also include water oxygenation means of any known type.

According to another aspect, the present invention provides a tray for use in a circulating fluid system such as a shellfish purification circuit, characterised by comprising a shallow outer container having imperforate bottom and side walls, overflow means towards one end thereof, and means for supporting shellfish spaced from the bottom of the container such that detritus falling from the shellfish can accumulate at a level lower than the lowermost shellfish, and such that water entering the container can be directed to flow from an inlet at a lower level than the level of the lowermost shellfish.

According to a further aspect of the present invention a method of shellfish culture, comprises maintaining the shellfish in a shallow layer in purified running water for a period sufficiently long for required growth or development to take place and/or for any contaminants to be excreted therefrom, in which the shellfish are held in a plurality of superimposed layers each layer being separated by a horizontal barrier wall from the adjacent underlying layer, and each layer being spaced from the said barrier wall by a water permeable support layer having openings therein sufficiently large to allow particulate matter excreted by the shellfish to pass therethrough, and directing the flow of water sequentially over the superimposed layers by withdrawing it from a free surface level above each layer of shellfish and introducing it into the water surrounding an underlying layer of shellfish.

Various embodiments of the present invention will now be more particularly described, by way of example, with reference to the accompanying drawings, in which:

Figure 1 is a schematic perspective view of an individual shallow container housing the mesh tray;

Figure 2 is a schematic side view of a stack of such containers housed in a tank;

Figure 3 is a circuit diagram illustrating the whole of a purification circuit incorporating the double-container of the present invention;

Figure 4 is a schematic side view illustrating an alternative container configuration;

Figure 5 is a schematic side view illustrating a further alternative container configuration, showing several stacked containers; and

Figure 6 is a cutaway perspective view illustrating the container shown in Figure 5.

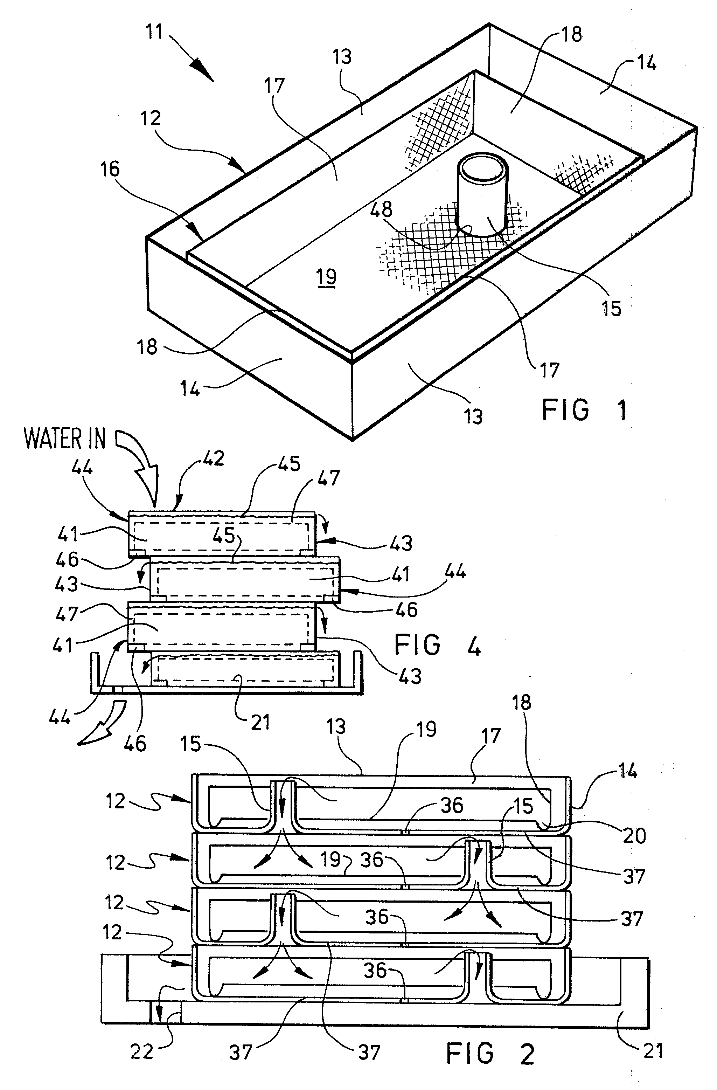

Referring first to Figures 1 and 2 a tray for use in a circulating fluid system is generally indicated with the reference numeral 11 and comprises an outer shallow container 12 of generally rectangular plan form with an imperforate bottom wall 37, a pair of upright parallel longer side walls 13 and a pair of upright parallel shorter side walls 14. Upstanding from the bottom of the container 12, aligned with the longitudinal centre line parallel to the longer side walls 13 and nearer to one of the shorter side walls 14 than the other is a standpipe 15 the height of which is slightly less than that of the side walls 13, 14 and which opens through an aperture in the bottom of the container 12.

Within the container 12 is an inner tray 16 of complementary shallow, rectangular upwardly open shape which has two parallel longitudinal side walls 17 and two parallel shorter side walls 18 projecting up from a flat horizontal mesh base 19. The side walls 17, 18 may also be mesh, as illustrated in Figures 1, 2 and 3 or the base only may be of foraminous, perforate or mesh structure. The openings in the foraminous, perforate or mesh structure constituting the inner tray 16 are preferably only slightly less than the dimensions of the shellfish to be contained therein, and preferably occupy a major part of the surface area of the bottom wall 19 and (if so formed) the side walls 17, 18. The shape of the container 12 allows it to be stacked, as shown in Figure 2, with similar such containers in a vertical stack having overflow standpipes 15 of adjacent containers at opposite ends so that, as illustrated by the arrows in Figure 2, water can flow from the uppermost container into which it is introduced as will be described in more detail below, and pass through the overflow standpipe 15 into the next lower container and, subsequently, flow out from this container into the next lower container each time providing the minimum disturbance to the water in the container into which it enters.

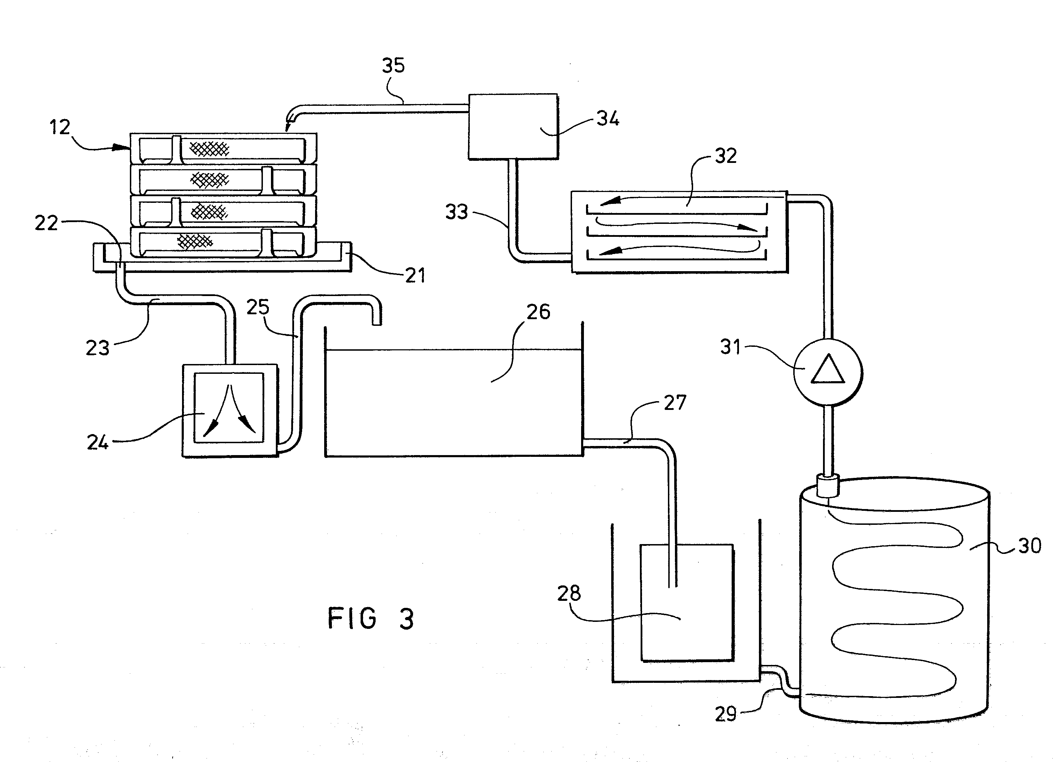

As can be seen more clearly in Figure 2 the bottom 19 of each mesh tray 16 is provided with two parallel ribs or feet 20 in approximate alignment with the end walls 18 so that the base 19 is held spaced from the bottom wall of the container 12 in which the tray is housed. The stack of containers 12 is located within an outer tank 21 which has a drain hole 22 leading to a further part of the circuit which will be described in relation to Figure 3. In addition to the overflow standpipes 15 each container 12 has a small drain hole which allows the whole of the container to drain if there is no continuing inflow of water. This is a safety precaution since shellfish remain in a healthier state in the absence of water than they do in stagnant water and, in the event of breakdown or failure of the water circulating system it is preferable for the containers 12 to drain than to leave them filled with stagnant water.

Turning now to the purification circuit illustrated in Figure 3 there is shown a tank 21 housing a stack of four containers 12 of the type illustrated in Figures 1 and 2, each containing a shallow layer of shellfish. In this arrangement, with four such layers, it will be appreciated that the surface area of floor space taken up by the tank 21 is being used four times more effectively than in prior art purification systems in which a shallow tank could take only a single layer of shellfish.

From the drain opening 22 a pipe 23 leads to a filter 24 which comprises a coarse strainer or cartridge filter feeding out by gravity through a pipe 25 leading to a reservoir 26 with an air-break between the outlet of the pipe 25 and the surface of the water in the reservoir 26. The outlet from the tank 26 leads via a pipe 27, again by gravity, to a further filter 28 in the form of a gravel filter or cockle shell biological filter, which is connected by a pipe 29 to a refrigeration plant 30. The refrigeration plant 30 is considered to be optional, however, and may be dispensed with if the circumstances of the purification system are such that temperatures in excess of a critical threshold at which dissolved oxygen becomes insufficient to support the molluscs in a healthy state is unlikely to be experienced. From the refrigeration plant 30 water is drawn by a pump 31 leading to an ultra-violet water purification system 32 which may be of any known type. From the ultra-violet purification system 32 a pipe 33 leads to an oxygenation plant 34 acting to introduce oxygen into the water passing therethrough before delivering it to an outlet pipe 35 which leads into the upper container 12 in the stack housed in the tank 21.

A purification cycle consists in loading shallow layers of shellfish in the mesh trays 16 within the containers 12, and stacking these as illustrated in the drawings. Water is then introduced into the uppermost container 12 through the delivery pipe 35 and, having filled the uppermost container 12, overflows into the next lower container and so on until it leaves the lowermost container 12, enters the tank 21 and passes out from this through the opening 22 into the water purification circuit where large scale detritus is filtered out in the filters 24, settled out in the tank 26 and further filtered in the filter 28 before the water is passed to a refrigeration unit for cooling (if required) and then pumped through the ultra-violet water purification system where any bacterial contamination is eradicated. Oxygenation of the water is then effected in order to ensure that the water delivered to the shellfish has an adequate oxygenation level to promote activity at the maximum metabolic rate permitted by the ambient temperature. At the end of a cleaning cycle the pump 31 is switched off allowing the containers 12 to drain down through the drain holes (not shown) referred to above. As soon as the uppermost container 12 is empty the tray 16 can be lifted out leaving any detritus excreted by the shellfish in a layer on the bottom of the container 12 undisturbed by the removal of the shellfish themselves in the tray 16. These can be washed lightly in fresh clean water and then packed for shipping. The tray 16 is then immediately ready for re-use. The container 12, on the other hand, housing the layer of faecal material must be hosed down and/or sterilised, if desired, before re-use. The robust construction of the containers 12 allows a stack, in practice, to be very much higher than the four-high stack illustrated in the drawings by way of example. It is anticipated, therefore, that individual batches of shellfish up to 20 tonnes may be purified in a floor area previously capable of processing only a few hundred kilogrammes.

Although described hereinabove specifically in relation to its use for purifying shellfish, the two-part container or tray of the present invention may in practice be used for other purposes and the invention may thus be conceived as constituting a tray suitable for use in a circulating fluid system such as a shellfish purification circuit (but not exclusively for such purpose), comprising a shallow outer container having imperforate bottom and walls and an overflow means towards one end thereof, and an inner tray of foraminous or mesh material which, when placed in the outer container, rests with at least the major part of its bottom wall spaced from the bottom of the container.

In an alternative embodiment (not illustrated) the stack of trays 14 may be positioned at a high level over the supporting container, in place of the container 21 which can then fulfil the same function as the reservoir 26. In this embodiment the outlet, replacing the outlet pipe 27 from the reservoir 26 in Figure 3, would be taken from a point sufficiently far above the bottom of the tank to allow settlement of sediment thereby avoiding the necessity for the filter 24. This simplified system would involve lower initial costs whilst nevertheless providing all the necessary features including an adequate reserve supply of water and a sufficient separation of sedimentary particles during the passage around the circuit. In this embodiment the filter 28 may also be dispensed with.

Likewise, for greater economy, the circuit can be arranged so that the outlet from the pipe 35 sprinkles the water onto the stack 12 from a greater height above the uppermost tray than illustrated in Figure 3, and the standpipe overflows may likewise be arranged so that the water moving from an upper tray to a lower one is caused to fall through the air between one tray and another thereby allowing the water to be oxygenated in transit making it possible to dispense with the oxygenation plant 34.

In a further embodiment (not illustrated) the overflow means may be in the form of standpipes placed outside the inner trays, or other water channels moulded into the container itself. In the former case the trays will then be made shorter than the containers. In such an embodiment a plurality of standpipe overflows may be positioned at one end of a rectangular container, with a mesh tray occupying the remaining part thereof.

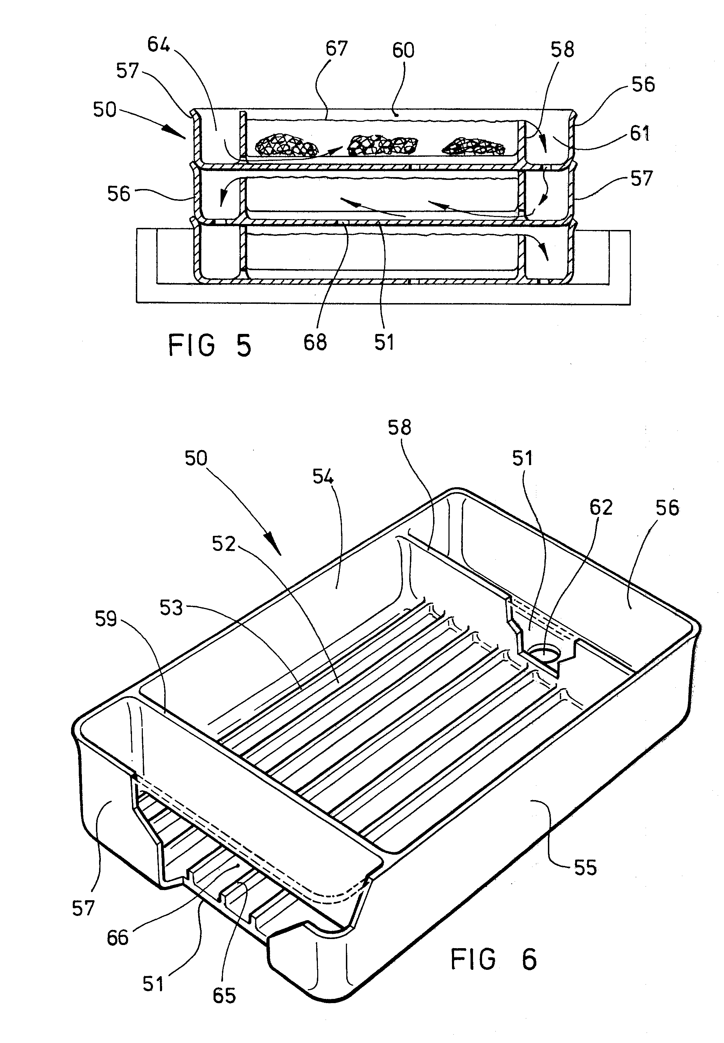

Referring now to Figure 4 there is shown an alternative conformation for the containers 12. This conformation is provided in order to make it possible to avoid the necessity for a standpipe overflow such as the overflow 15 in the embodiment of Figure 1 so that the mesh container 16 does not require an opening to allow the overflow to project through its bottom wall 19. In the embodiment of Figure 4 the containers are indicated with the reference numeral 41 and each is shaped such that it has three side walls of the same height defining an upper rim 42 whilst at one end, indicated by the reference numeral 43 there are formed weir means at a level lower than the rim 42. The weir means may be in the form of one or a plurality of holes passing through the end wall 43 or may be one or more recesses in the upper edge which lower this edge to a short distance below the rim 42. The containers 41 also have locating means so that they can be stacked in a laterally off-set arrangement as illustrated in Figure 4 so that the end walls 43 of each container 41 are spaced inwardly from the opposite end walls of the container 41, in this case indicated by the reference numeral 44. The end walls 44 thus overhang the end walls 43 so that water in an upper container 41 can fill this to a level indicated by the chain line 45 and then flow out through the weir means (not illustrated) before reaching the level of the rim 42. Because of the staggered arrangment the water falls from an upper container 41 into the exposed end portion of the underlying container 41 adjacent the end wall 44 thereof and can then fill the underlying container until reaching the level 45 whereupon it flows over the weir means into the next underlying container 41, and so on until reaching the lowermost container 41 whereupon the water flows into the collection tank 21 from which it passes into a circuit such as that illustrated in Figure 3 or any of the modified circuits described hereinabove. One advantage of this configuration, apart from the avoidance of the need for a standpipe overflow and any special configuration to the interior mesh or open work trays, lies in the fact that the water arriving at any tank enters close to one end and exits from this tank at the far end so that the throughflow of water takes place right from one end to the other without there being any "dead" areas where no water flow takes place. Also in this embodiment it will be seen that the container 41 has shoulders 46 at each end to support internal perforated or mesh traps 47 which have an entirely regular outline and in particular have no need of an opening such as that in the tray 16 of the embodiment of Figure 1, which allows passage of the standpipe 15. This simplifies manufacture and makes it easier to use because the tray 47 does not have to be fitted in a particular orientation as does the tray 16.

Turning now to Figures 5 and 6, the alternative embodiment shown differs in that it has different means for supporting the shellfish spaced from the bottom of the container. Whereas the container illustrated in Figures 1 to 4 includes an internal removable mesh tray or liner 16, 47 the container illustrated in Figures 5 and 6, which is indicated with the reference numeral 50, has a bottom wall 51 formed with a plurality of longitudinally extending channels 52 defined by spaced upstanding ribs 53 which are integrally moulded with the container 50 itself. In order to form the container 50 with sufficient strength this may conveniently be rotationally moulded from plastics material.

As can be seen in Figures 5 and 6, the container 50 has upstanding side walls 54, 55 and end walls 56, 57 and has an internal structure constituted by two barriers or baffles 58, 59 the function of which will be described in more detail below.

The barrier 58 is a weir or dam barrier which separates a main central portion 60 of the container 50 from an outlet compartment 61 in the bottom wall of which is formed an outlet opening 62. By contrast the barrier 59 is an input diffuser or deflector baffle which separates the central compartment 60 from an input chamber 64. The baffle 59 spans the whole width of the container 50 between the opposite side walls 54, 55 and rises to a level close to the perimeter of the container 50 defined by the side walls 54, 55 and end walls 56, 57, whilst its lower edge is in contact with the upper surfaces 65 of the longitudinal ribs 53 which define the channels 52, and which extend from the central compartment 60 into the input chamber 64 thereby defining small openings 66 beneath the baffle 59 and between adjacent ribs 53 by which the input chamber 64 communicates with the main compartment 60.

The weir barrier 58, on the other hand, whilst also spanning the width of the container 50 between opposite side walls 54, 55 contacts the bottom 51 of the container and extends upwardly from this bottom wall 51 to a level, spaced from the upper rim of the container 50 defined by the side walls 54, 55 and end walls 56, 57 such as to define, in use, the maximum free surface level 67 of water in the central compartment 60 as can be seen from Figure 5. Water in the compartment 60 cannot rise to a level higher than that of the weir barrier 58 without overflowing the weir into the output chamber 61 from which it flows out through the outlet opening 62 in the bottom wall 51 which is common with the bottom wall of the whole container 50. The ribs 53 which define the channels 52 abut the facing surface of the weir barrier 58 but do not project beyond it into the output chamber 61. The central compartment 60 has a drain hole 68 at a central location.

In use of the container illustrated in Figures 5 and 6 a stack such as that shown by the three containers illustrated in Figure 5 is made by superimposing successive containers 50 longitudinally reversed so that in each container the output compartment wall 56 lies over an input compartment wall 57 and it itself overlain by an input compartment wall 57. Water entering the input compartment 64 is constrained to flow from this into the main compartment 60 only through the openings 66 between adjacent ribs 53 and under the input baffle 59 the height of which is greater than that of the weir barrier 58 so that the upper edge of the input baffle 59 always rises above the surface of the water in the container 50. In this way the inflow of water is both stilled and caused to enter at a low level so that any risk that the fresh water would float at a high level and be discharged over the weir without having flushed the shellfish in the main compartment 60 is avoided. The beneficial effect is also achieved that the flow of water from a low level through the opening 66 to a high level where the water overflows the weir barrier 58 means that the shellfish in the main compartment 60 experience a rising flow of water which has been found in practice to be beneficial, especially if the apparatus of the invention is used for long term culture or growth of shellfish rather than merely for purification. The shellfish may rest in bulk on the ribs 53 or may be further contained in foraminous trays such as those illustrated in Figures 1 to 4 or, as illustrated in Figure 5, may be contained in nets carrying a convenient quantity of shellfish for subsequent processing and/or transport. Individual nets of shellfish can be readily handled using hook or grab mechanisms and the loose packing of shellfish in nets nevertheless allows the shellfish to form a relatively shallow layer within the compartment 60 during treatment.

By rotationally moulding the container 50 from plastics material a relatively thick bottom wall 51 integrally formed with the ribs 53 and the side and end walls of the container as well as the weir barrier 58 and input baffle 59 is formed which is strong enough to withstand all the stresses of use.

The water flow parallel to the channels 52 defined by the grooves 53 also avoids turbulence, any splashing or water flow caused by liquid falling from an upper opening 62 of an overlying container 50 being damped within the input chamber 64, and a thorough flushing of the whole of the central compartment 60 is achieved without the risk of any dead spots or backwater areas where no substantial flow takes place. The rising flow of water up and around the shellfish also ensures that these are maintained in optimum conditions for growth and/or for purification, whilst the configuration of the container allows ready cleaning, for example by pressure washing after the shellfish have been removed and the trays emptied. As mentioned before, because shellfish remain in better condition out of water than in stagnant water the small openings 68 in the main compartment 60 allow these to drain slowly so that should the input water supply fail the whole system will slowly drain down rather than remain stagnant.

**Claims**

1. A shellfish culture or purification system characterised in that it includes a plurality of stackable shallow containers (12) each having an imperforate bottom wall (37), imperforate side walls (13,14), overflow means (15,44) to limit water therein to a maximum level determined by the level of the overflow means (15,44), and a drainage hole (36), each of the containers (12) having means (16, 47; 53 ) for supporting shellfish spaced from the bottom wall (37) of the said container (12) when placed therein whereby to allow detritus to fall below the level at which the shellfish are supported.

2. A shellfish culture or purification system according to Claim 1, characterised in that the said means for supporting the shellfish spaced from the bottom wall of the container comprises a foraminous tray (16) having downwardly projecting feet or ribs (20) for contacting the bottom wall (37) of the container (12) so as to hold the bottom wall (16) of the foraminous tray (16) spaced therefrom.

3. A shellfish culture or purification system according to Claim 1, characterised in that the containers have upstanding members (46) for supporting the bottom of one or more foraminous trays (47) with the bottoms thereof spaced from the bottom of the container.

4. A shellfish culture or purification system according to any preceding Claim, characterised in that a stack of containers (12,41) having inner mesh or perforate trays (16,47) is housed in an outer tank (21) from which water may be pumped to a water cleaning or purification circuit (23-35).

5. A shellfish culture or purification system according to any preceding Claim, characterised in that the overflow means (15,43) of the stackable containers (12,41) are at or offset towards one end of the containers (12,41), which latter are symmetrical about a longitudinal centre line to allow vertically adjacent containers (12,41) to be longitudinally reversed so that the path of water entering from the overflow of an overlying container (12,41) extends along the length of a container to the overflow means (15,43) thereof.

6. A shellfish culture or purification system according to any preceding Claim, characterised in that the or each container (12, 41) has water-directing input means for directing the inflow of water to a low level in the container.

7. A shellfish culture or purification system according to Claim 6, characterised in that the said water-directing input means comprise a barrier (59) at the end of the container opposite the said overflow means, extending above the level of the overflow means and defining water passages adjacent the bottom of the container.

8. A shellfish culture or purification system according to any preceding Claim, characterised in that the said means for supporting shellfish spaced from the bottom wall of the container comprises or includes a plurality of parallel upstanding ribs defining parallel channels therebetween and the upper surfaces of which constitute support surfaces for the shellfish or for containment means housing the shellfish.

9. A tray for use in a circulating fluid system such as a shellfish purification circuit, characterised by comprising a shallow outer container (12,41) having imperforate bottom (37) and side walls (13,14) and overflow means (15,43) towards one end thereof, and means for supporting shellfish spaced from the bottom of the container such that detritus falling from the shellfish can accumulate at a level lower than the lowermost shellfish, and such that water entering the container can be directed to flow from an inlet at a lower level than the level of the lowermost shellfish.

10. A method of purifying shellfish, comprising maintaining the shellfish in a shallow layer in purified running water for a period sufficiently long for any contaminants to be excreted therefrom, characterised in that the shellfish are held in a plurality of superimposed layers each layer being separated by a horizontal barrier wall from the adjacent underlying layer, and each layer being spaced from the said barrier wall by a water permeable support layer having openings therein sufficiently large to allow particulate matter excreted by the shellfish to pass therethrough, and directing the flow of water sequentially over the superimposed layers by withdrawing it from a free surface level above each layer of shellfish and introducing it into the water surrounding an underlying layer of shellfish.

0285457

FIG 1

WATER IN

FIG 4

FIG 2

FIG 3

0285457

FIG 5

FIG 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-4 180 012 (ZENGER) <br> * Column 1, lines 11-45; column 2, lines 38-68; column 3, lines 59-60; claim 1,10,11; figures 1,3,5 * | 1,3,6,7 | A 01 K 61/00 |
| A | | 9,10 | |
| X | US-A-3 024 764 (BRITTAIN) <br> * Column 1, lines 16-25; column 2, lines 50-66; column 3, lines 1-24; column 5, lines 19-37; claim 1; figures 2,6 * | 1,9 | |
| A | | 2-8,10 | |
| A | US-A-3 192 899 (LUCEY) <br> * Column 1, lines 41-52; column 2, lines 50-66; column 4, lines 3-11; column 4, lines 28-50; column 5, lines 43-52; cliam 1; figures 4,7,8,10 * | 1,4,8 | |
| A | US-A-4 428 145 (WHEELER) <br> * Column 1, lines 42-47; column 3, line 64 - column 4, line 7; claim 7; figure 2 * | 1,5 | TECHNICAL FIELDS SEARCHED (Int. Cl.4) <br><br> A 01 K |
| A | WO-A-8 203 532 (O'SULLIVAN) <br> * Claim 1 * | 10 | |
| A | US-A-2 804 045 (SCOTT) | | |
| A | WO-A-8 502 089 (CHARLON) | | |

The present search report has been drawn up for all claims

| Place of search | Date of completion of the search | Examiner |
|---|---|---|
| THE HAGUE | 05-07-1988 | VON ARX V.U. |